# EUROPEAN PATENT SPECIFICATION

(11) **EP 2 219 401 B1**
(45) Date of publication and mention of the grant of the patent: **25.10.2017**
(21) Application number: 10151910.6
(22) Date of filing: 28.01.2010
(51) Int. Cl.: H04W 64/00

(54) **System and method for efficiently populating an access point database**
System und Verfahren zum effizienten Ausfüllen einer Zugangspunktdatenbank
Système et procédé pour le peuplement efficace d'une base de données d'un point d'accès

(30) Priority: 13.02.2009 US 378314
(43) Date of publication of application: 18.08.2010
(73) Proprietor: Sony Corporation, Tokyo 108-0075 (JP); Sony Electronics Inc., Park Ridge, NJ 07656 (US)
(72) Inventor: Georgis, Nikolaos, San Diego, CA 92128 (US); Zhou, Yi, San Diego, CA 92128 (US); Carpio, Fredrik, San Diego, CA 92127 (US)
(74) Representative: D Young & Co LLP

(56) References cited:
- WO-A2-2007/056738
- US-A1- 2006 240 840

## Description

This invention relates generally to a system and method for efficiently populating an access point database.

Implementing effective methods for utilizing mobile electronic devices is a significant consideration for designers and manufacturers of contemporary electronic devices. However, effectively implementing mobile devices may create substantial challenges for system designers. For example, enhanced demands for increased system functionality and performance may require more device processing power and require additional device resources. An increase in processing or device requirements may also result in a corresponding detrimental economic impact due to increased production costs and operational inefficiencies.

Furthermore, enhanced device capability to perform various advanced operations may provide additional benefits to a device user, but may also place increased demands on the control and management of various device components. For example, implementing an enhanced electronic device that effectively provides accurate device-location information to a device user may present certain difficulties because of the unpredictable operating environments that may potentially be encountered.

Due to growing demands on system resources and the significant difficulty in predicting the varying device operating conditions and environments, it is apparent that developing knew techniques for implementing and utilizing mobile electronic devices is a matter of concern for related electronic technologies. Therefore, for all the foregoing reasons, developing effective systems for implementing and utilizing mobile electronic devices remains a significant consideration for designers, manufacturers, and users of contemporary electronic devices.

US 2006/0240840A discloses a prior art system for providing locations of Wifi Access Points. WO2007/056738A describes a prior art system that provides a database of access points.

In accordance with the present invention, a system and method are disclosed for efficiently populating an access point database as defined by the appended claims. In accordance with one embodiment of the present invention, mobile devices in an electronic network initially determine their physical location by utilizing any appropriate techniques. For example, the mobile devices may receive transmitted signals from a global positioning system (GPS), and may then utilize the corresponding GPS signals to determine their respective physical locations. The mobile devices each transmit their particular location coordinates to a location server in the electronic network.

In accordance with the present invention, the mobile devices automatically perform a wireless scanning procedure to detect and store any appropriate access point scan data from access point signals transmitted from one or more access points that are distributed throughout the electronic network. The captured access point scan data may include, but is not limited to, access point identifiers and access point signal strengths corresponding to respective access points. The mobile devices then transmit the captured access point scan data to the location server by utilizing any appropriate techniques.

An access point location calculator of the location server utilizes the received access point scan data to perform an access point location procedure. In particular, the access point location calculator utilizes the received access point scan data to calculate specific access point locations for one or more access points in the electronic network by utilizing any appropriate and effective location calculation techniques.

The location server then updates the access point database with any new or different access point locations that are discovered as a result of the foregoing access point location procedure. Finally, the location server may transmit the updated access point database to the mobile devices for use in calculating physical locations of the respective mobile devices with respect to the access points. For at least the foregoing reasons, the present invention therefore provides an improved system and method for efficiently populating an access point database.

Preferably, the invention relates to techniques for utilizing mobile electronic devices.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a block diagram of an electronic system, in accordance with one embodiment of the present invention;
FIG. 2 is a block diagram for one embodiment of an access point of FIG. 1, in accordance with the present invention;
FIG. 3 is a block diagram for one embodiment of a mobile device of FIG. 1, in accordance with the present invention;
FIG. 4 is a block diagram for one embodiment of the MD memory of FIG. 3, in accordance with the present invention;
FIG. 5 is one embodiment for one embodiment of the location server of FIG. 1, in accordance with the present invention;
FIG. 6 is a block diagram for one embodiment of the server memory of FIG. 5, in accordance with the present invention;
FIG. 7 is a block diagram for one embodiment of the AP database of FIGS. 4 and 6, in accordance with the present invention;
FIG. 8 is a diagram illustrating an access point location procedure, in accordance with one embodiment of the present invention; and
FIGS. 9A-9B present a flowchart of method steps for efficiently populating an access point database, in accordance with one embodiment of the present invention.

The present invention relates to an improvement in the effective utilization of mobile electronic devices. The following description is presented to enable one of ordinary skill in the art to make and use the invention, and is provided in the context of a patent application and its requirements. Various modifications to the disclosed embodiments will be readily apparent to those skilled in the art, and the generic principles herein may be applied to other embodiments. Thus, the present invention is not intended to be limited to the embodiments shown, but is to be accorded the widest scope consistent with the principles and features described herein.

The present invention is described herein as a system and method for populating an access point database, and includes a network of access points that are implemented to transmit access point signals by utilizing a wireless broadcasting procedure. One or more mobile devices are then configured to wirelessly receive and analyze the access point signals to produce access point scan data corresponding to the access points. A location server receives and analyzes the access point scan data to determine specific access point locations for the access points. The location server may then utilize the calculated access point locations to populate the access point database.

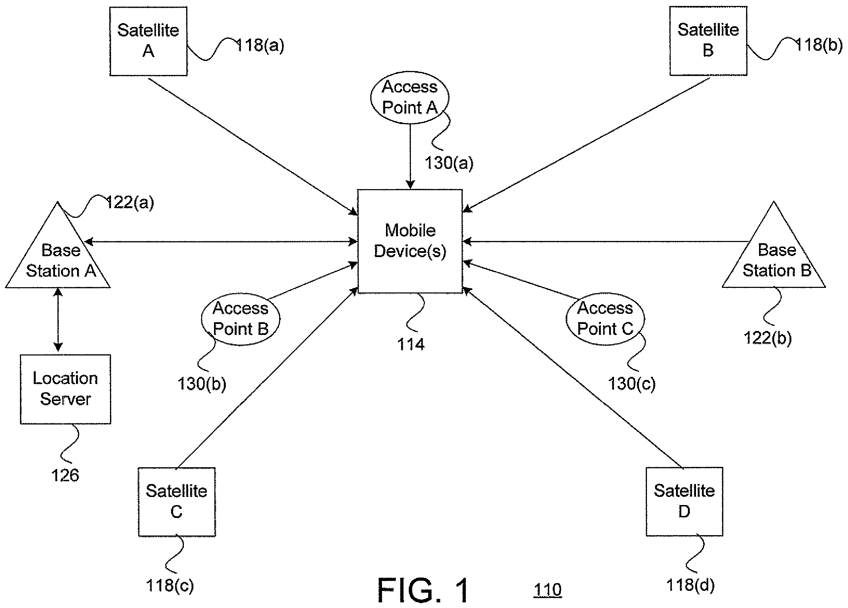

Referring now to FIG. 1, a block diagram of an electronic system 110 is shown, in accordance with one embodiment of the present invention. In the FIG. 1 embodiment, electronic system 110 may include, but is not limited to, one or more mobile device(s) 114, a plurality of satellites 118, a plurality of base stations 122, a location server 126, and a plurality of access points 130. In alternate embodiments, electronic system 110 may be implemented using various components and configurations in addition to, or instead of, those components and configurations discussed in conjunction with the FIG. 1 embodiment.

For purposes of illustration, the FIG. 1 embodiment is implemented with one or more mobile device(s) 114, four satellites 118, two base stations 122, one location server 126, and three access points 130. However, in various other embodiments, electronic network 110 may be implemented to include any desired number of the mobile devices 114, satellites 118, base stations 122, location servers 126, and access points 130.

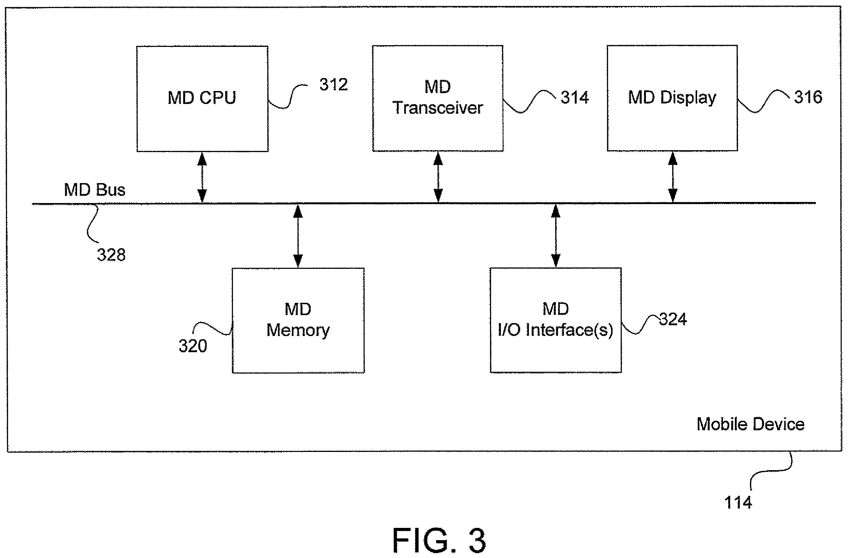

In the FIG. 1 embodiment, mobile device(s) 114 may be implemented as any type of electronic device for which a current physical location may be determined and conveyed to a device user or other appropriate entity. For example, in certain embodiments, mobile devices 114 may include, but are not limited to, a laptop computer device, a personal digital assistant (PDA), or a cellular telephone. Additional details regarding the implementation and utilization of mobile device 114 are further discussed below in conjunction with FIGS. 3-4.

In the FIG. 1 embodiment, satellites 130 include, but are not limited to, a satellite A 118(a), a satellite B 118(b), a satellite C 118(c), and a satellite D 118(d) that are implemented by utilizing any appropriate technologies to perform any desired functions or operations. For example, in certain embodiments, satellites 118 may be implemented as part of a known or enhanced global positioning system (GPS). In the FIG. 1 embodiment, satellites 118 typically transmit respective satellite beacon signals that mobile devices 114 may receive and analyze using known location calculation procedures (such as trilateralization and/or triangulation) to potentially determine current physical locations (such as longitude, latitude, and altitude information) for mobile devices 114.

However, in certain situations, mobile devices 114 may be unable to receive satellite beacon signals from a sufficient number of the satellites 130 to successfully perform the location calculation procedures. For example, mobile devices 114 may be inside a building or other structure that prevents some or all of the satellite beacon signals from reaching mobile devices 114. Or one or more of the satellite beacon signals may have insufficient signal quality characteristics. To provide additional signal sources from locations other than satellites 130, the FIG. 1 embodiment may include a base station A 122(a) and a base station B 122(b) that are both implemented as terrestrial devices that transmit pilot signals that may be received by mobile devices 114. As with the foregoing satellite beacon signals, mobile devices 114 may analyze the pilot signals from base stations 122 using similar location calculation procedures potentially determine the current physical locations of mobile devices 114.

In the FIG. 1 embodiment, base stations 122 may be implemented by utilizing any appropriate technologies to perform any desired functions or operations. For example, in certain embodiments, base stations 122 may be implemented as part of a known or enhanced wireless wide-area network (WWAN) system by utilizing any appropriate technologies. Furthermore, in certain embodiments, satellites 118 and base stations 122 may be implemented as part of a known or enhanced assisted global-positioning system (AGPS) network. In certain embodiments, electronic network 110 may also include a location server 126 that mobile devices 114 utilize to perform various types of calculations or processing functions to thereby conserve processing resources for mobile devices 114.

However, in certain operating environments, mobile devices 114 may still be unable to receive a satisfactory combination of satellite beacon signals from the satellites 130 and pilot signals from the base stations 122 to successfully perform the location calculation procedures to accurately locate mobile device 114. For example, mobile devices 114 may be inside a concrete parking structure or a shopping mall that prevents some or all of the satellite beacon signals and pilot signals from reaching mobile device 114. Or one or more of the satellite beacon signals or base station pilot signals may have insufficient signal quality characteristics (signal strength, signal-to-noise ratios, etc.).

In accordance with the present invention, in order to provide additional beacon signals from signal sources other than satellites 130 and base stations 122, the FIG. 1 embodiment advantageously includes access points 130 that are implemented as terrestrial devices that transmit access-point beacon signals to mobile devices 114. As with the previously-discussed satellite beacon signals and pilot signals, mobile devices 114 may also analyze the access-point beacon signals using similar location calculation procedures to more accurately and effectively determine the current physical location of mobile devices 114.

In the FIG. 1 embodiment, access points 130 include, but are not limited to, an access point A 130(a), an access point B 130(b), and an access point C 130(c) that may be implemented by utilizing any appropriate technologies to perform any desired functions or operations. For example, in certain embodiments, access points 130 may be implemented as part of a known or enhanced wireless local-area network (WLAN) system using any appropriate technologies. In certain embodiments, access points 130 may be implemented according to WLAN standards that include, but are not limited to, any of the known 802.11 WLAN standards (such as 802.11a. 802.11b, 802.11g, and 802.11n).

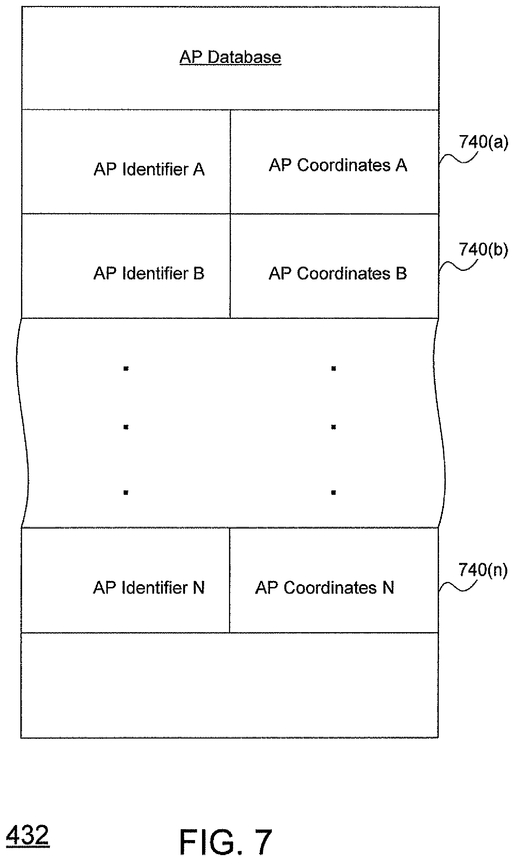

In certain embodiments in which access points 130 are implemented as publicly-deployed WiFi "hotspots" or other similar WLAN nodes/systems, the widespread presence of such WLAN networks provides a ready availability of pre-existing potential access points 130 at many public locations. However, in order to successfully utilize access points 130 to accurately locate mobile devices 114, an access point (AP) database (see FIG. 7) is typically utilized to specifically indicate physical coordinates for each access point 130.

Because access points 130 have easily changeable locations, and because access points 130 may be added or removed at any time, one traditional method of populating and maintaining a AP database is to employ one or more individuals to drive around an area with a WiFi scanner device to measure and physically locate any available access points 130. This process is time-consuming and expensive. In addition, any resulting AP database may be inaccurate because of changes that have occurred since the last scanning process.

The present invention therefore proposes to advantageously utilize WiFi functionality of the mobile devices 114 to automatically and transparently scan on an ongoing basis for access point signals transmitted from the access points 130. The mobile devices 114 may then automatically transmit the AP measurement data to location server 126 or another appropriate entity for populating and updating the AP database. Additional details regarding the efficient updating of an access point database are further discussed below in conjunction with FIGS. 3-9B.

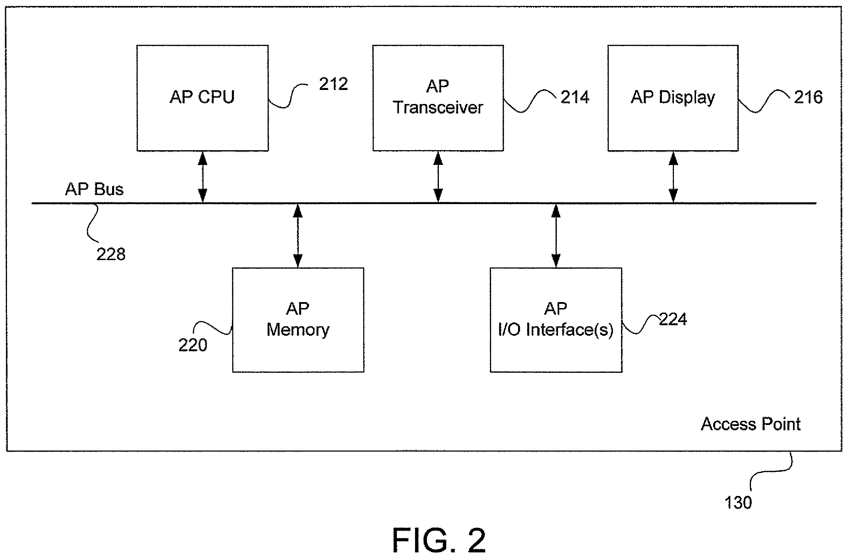

Referring now to FIG. 2, a block diagram for one embodiment of a FIG. 1 access point 130 is shown, in accordance with the present invention. In the FIG. 2 embodiment, access point 130 may include, but is not limited to, an AP central processing unit (CPU) 212, an AP transceiver 214, an AP display 216, an AP memory 220, and one or more AP input/output interfaces (I/O interfaces) 224. Selected ones of the foregoing components of access point 130 may be coupled to, and communicate through, an AP bus 228. In alternate embodiments, access point 130 may be implemented using various components and configurations in addition to, or instead of, certain of components and configurations discussed in conjunction with the FIG. 2 embodiment.

In the FIG. 2 embodiment, AP CPU 212 may be implemented to include any appropriate and compatible microprocessor device that preferably executes software instructions to thereby control and manage the operation of access point 130. In the FIG. 2 embodiment, AP memory 220 may be implemented to include any combination of desired storage devices, including, but not limited to, read-only memory (ROM), random-access memory (RAM), and various types of non-volatile memory, such as floppy disks, flash memory, or hard disks. In the FIG. 2 embodiment, AP I/O interfaces 224 may preferably include one or more input and/or output interfaces to receive and/or transmit any required types of information for access point 130. For example, in the FIG. 2 embodiment, access point 130 may utilize AP I/O interfaces 224 to bi-directionally communicate with any desired type of external entities to receive or send electronic information by utilizing any appropriate and effective techniques.

In the FIG. 2 embodiment, access point 130 may utilize AP display 216 for displaying any desired type of information by utilizing any effective type of display technologies. In the FIG. 2 embodiment, AP transceiver 214 may include any appropriate means for bi-directionally transferring (transmitting and/or receiving) electronic information between access point 130 and other devices by utilizing wireless communication techniques. For example, access point 130 may utilize AP transceiver 214 to transmit any desired type of access-point beacon signals to mobile devices 114, as discussed above in conjunction with FIG. 1.

In the FIG. 2 embodiment, AP transceiver 214 may generate certain types of enhanced access-point beacon signals that include an enhanced acquisition code that mobile device 114 may then analyze to identify a particular access point 130, and to evaluate signal quality characteristics for that particular access point 130. The signal quality characteristics may include, but are not limited to signal strength characteristics. Additional details regarding the implementation and utilization of access point 130 are further discussed below in conjunction with FIGS. 3-9B.

Referring now to FIG. 3, a block diagram for one embodiment of a FIG. 1 mobile device 114 is shown, in accordance with the present invention. In the FIG. 3 embodiment, mobile device 114 may include, but is not limited to, an MD central processing unit (CPU) 312, an MD transceiver 314, an MD display 316, an MD memory 320, and one or more MD input/output interfaces (I/O interfaces) 324. Selected ones of the foregoing components of mobile device 114 may be coupled to, and communicate through, an MD bus 328. In alternate embodiments, mobile device 114 may be implemented using components and configurations in addition to, or instead of, certain of those components and configurations discussed in conjunction with the FIG. 3 embodiment.

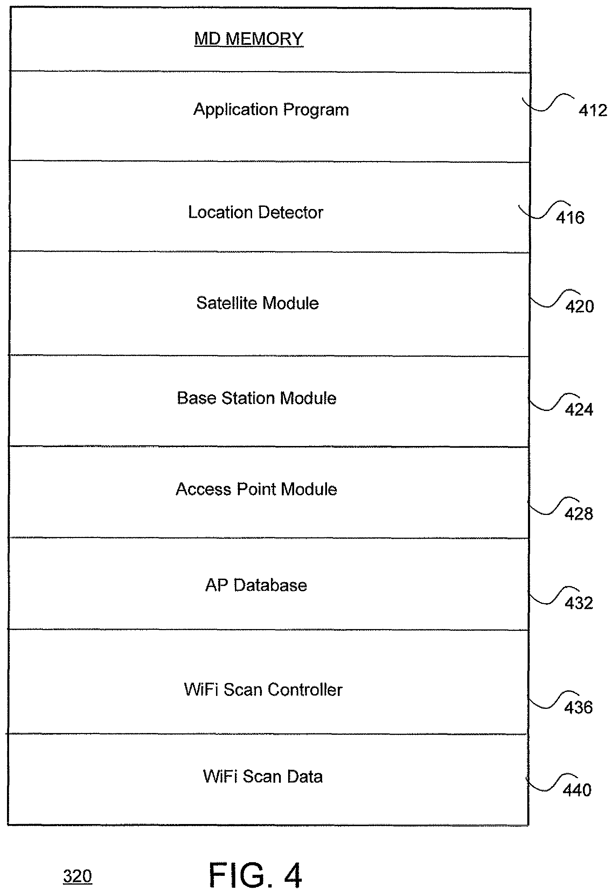

In the FIG. 3 embodiment, MD CPU 312 may be implemented to include any appropriate and compatible microprocessor device that preferably executes software instructions to thereby control and manage the operation of mobile device 114. In the FIG. 3 embodiment, MD memory 320 may be implemented to include any combination of desired storage devices, including, but not limited to, read-only memory (ROM), random-access memory (RAM), and various types of non-volatile memory, such as floppy disks, flash memory, or hard disks. Additional details regarding the implementation and utilization of MD memory 320 are further discussed below in conjunction with FIG. 4.

In the FIG. 3 embodiment, MD I/O interfaces 324 may preferably include one or more input and/or output interfaces to receive and/or transmit any required types of information for mobile device 114. For example, in the FIG. 3 embodiment, mobile device 114 may utilize MD I/O interfaces 324 to bi-directionally communicate with any desired type of external entities to receive or send electronic information by utilizing any appropriate and effective techniques. In the FIG. 3 embodiment, mobile device 114 may utilize MD display 316 for displaying any desired type of information by utilizing any effective type of display technologies.

In the FIG. 3 embodiment, MD transceiver 314 may include any appropriate means for bi-directionally transferring (transmitting and/or receiving) electronic information between mobile device 114 and other devices by utilizing wireless communication techniques. In certain embodiments, MD transceiver 314 may include, but is not limited to, a satellite transceiver for communicating with satellites 118, a base station transceiver for communicating with base stations 126, and an access-point transceiver for communicating with access points 130. Additional details regarding the implementation and utilization of mobile device 114 are further discussed below in conjunction with FIGS. 4-9B.

Referring now to FIG. 4, a block diagram for one embodiment of the FIG. 3 MD memory 320 is shown, in accordance with the present invention. In the FIG. 4 embodiment, MD memory 320 includes, but is not limited to, an application program 412, a location detector 416, a satellite module 420, a base station module 424, an access point module 428, an access point (AP) database 432, a WiFi scan controller 436, and WiFi scan data 440. In alternate embodiments, MD memory 320 may include components and functionalities in addition to, or instead of, certain of those components and functionalities discussed in conjunction with the FIG. 4 embodiment.

In the FIG. 4 embodiment, application program 412 may include program instructions that are preferably executed by MD CPU 312 (FIG. 3) to perform various functions and operations for mobile device 114. The particular nature and functionality of application program 412 typically varies depending upon factors such as the specific type and particular functionality of the corresponding mobile device 114.

In the FIG. 4 embodiment, location detector 412 may be utilized to coordinate and manage enhanced mobile-device location procedures to determine a current physical location of a mobile device 114 by utilizing any effective techniques. For example, in certain embodiments, location detector 412 may utilize information in AP database 432 to perform device location procedures. In certain embodiments, location server 126 (FIG. 1) may also have a software module similar to location detector 412 to remotely perform certain required processing functions. In the FIG. 4 embodiment, satellite module 424 may be utilized to manage communications with satellites 118 (FIG. 1). Similarly, base station module 424 may be utilized to manage communications with base stations 122 (FIG. 1), and access point module 428 may be utilized to manage communications with access points 130 (FIG. 1).

In the FIG. 4 embodiment, a WiFi scan controller 436 automatically performs access point (AP) scanning procedures to measure relevant characteristics of transmissions from one or more access points 130. WiFi scan controller then stores any collected information as WiFi scan data 440. In the FIG. 4 embodiment, WiFi scan data 440 may include any types of measurements, data, or other information relating to respective ones of the access points 130 (FIG. 1). Examples of such information include, but are not limited to, presence/availability of access-point beacon signals, signal strengths, signal-to-noise values, signal quality characteristics, signal delays, etc.

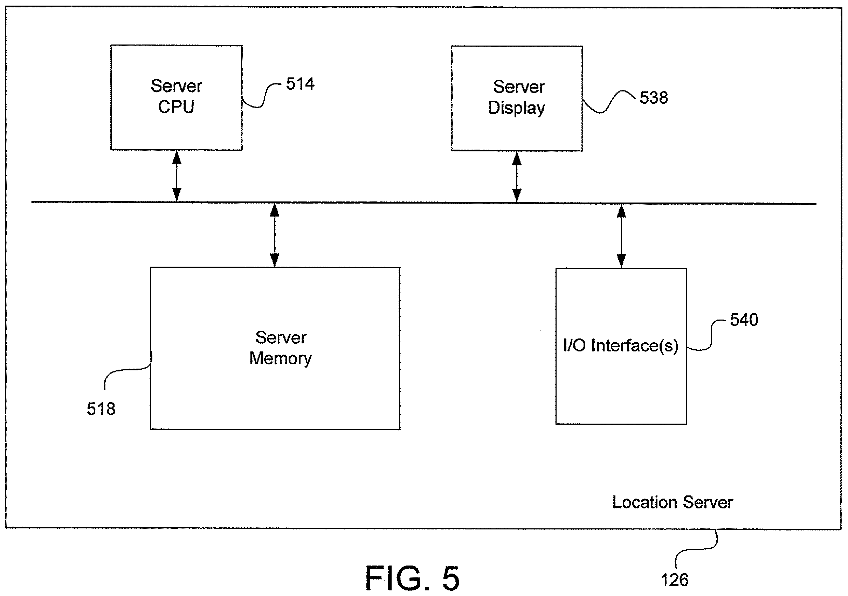

In the FIG. 4 embodiment, the location detector 416, WiFi scan controller 436, and the various modules 420, 424, and 428 are disclosed and discussed as being implemented as software. However, in alternate embodiments, some or all of these functions may be performed by appropriate electronic hardware circuits that are configured for performing various functions that are equivalent to those functions of the software modules discussed herein. The implementation and utilization of WiFi scan controller are further discussed below in conjunction with FIGS. 5-9B.

Referring now to FIG. 5, a block diagram for the FIG. 1 location server 126 is shown, in accordance with one embodiment of the present invention. In the FIG. 5 embodiment, location server 126 includes, but is not limited to, a server CPU 514, a server memory 518, a server display 538, and I/O interface(s) 540. In alternate embodiments, location server 126 may be implemented using components and configurations in addition to, or instead of, certain of those components and configurations discussed in conjunction with the FIG. 5 embodiment.

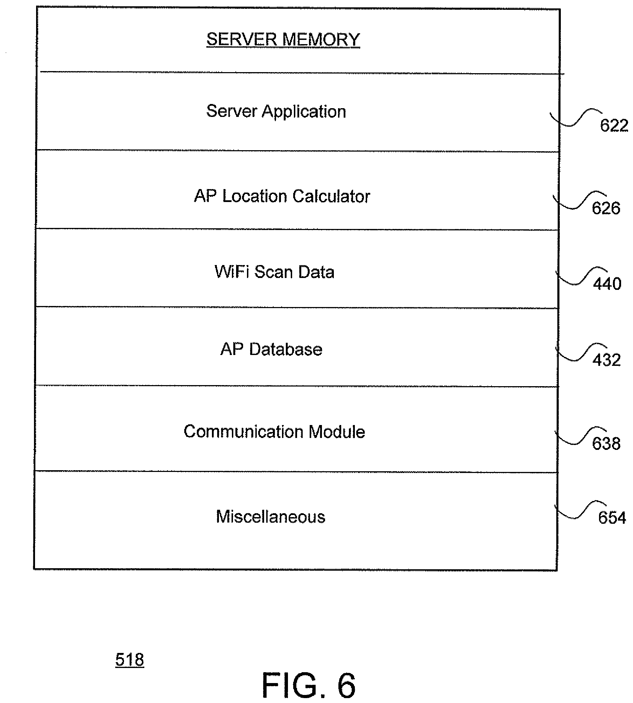

In the FIG. 5 embodiment, server CPU 514 may be implemented to include any appropriate and compatible microprocessor device that preferably executes software instructions to thereby control and manage the operation of location server 126. In the FIG. 5 embodiment, server memory 518 may be implemented to include any combination of desired storage devices, including, but not limited to, read-only memory (ROM), random-access memory (RAM), and various types of non-volatile memory, such as floppy disks, flash memory, or hard disks. Additional details regarding the implementation and utilization of server memory 518 are further discussed below in conjunction with FIG. 6.

In the FIG. 5 embodiment, I/O interfaces 540 may preferably include one or more input and/or output interfaces to receive and/or transmit any required types of information for location server 126. For example, in the FIG. 5 embodiment, location server 126 may utilize I/O interfaces 540 to bi-directionally communicate with any desired type of external entities to receive or send electronic information by utilizing any appropriate and effective techniques. In the FIG. 5 embodiment, location server 126 may utilize server display 538 for displaying any desired type of information by utilizing any effective type of display technologies. Additional details regarding the implementation and utilization of location server 126 are further discussed below in conjunction with FIGS. 6-9B.

Referring now to FIG. 6, a block diagram for one embodiment of the FIG. 5 server memory 518 is shown, in accordance with the present invention. In the FIG. 5 embodiment, server memory 518 includes, but is not limited to, a server application 622, an AP location calculator 626, WiFi scan data 440, an AP database 432, a communication module 638, and miscellaneous information 654. In alternate embodiments, server memory 518 may include components and functionalities in addition to, or instead of, certain of those components and functionalities discussed in conjunction with the FIG. 6 embodiment.

In the FIG. 6 embodiment, server application 622 may include program instructions that are preferably executed by server CPU 514 (FIG. 5) to perform various functions and operations for location server 126. The particular nature and functionality of server application 622 typically varies depending upon factors such as the specific type and particular functionality of the corresponding location server 126.

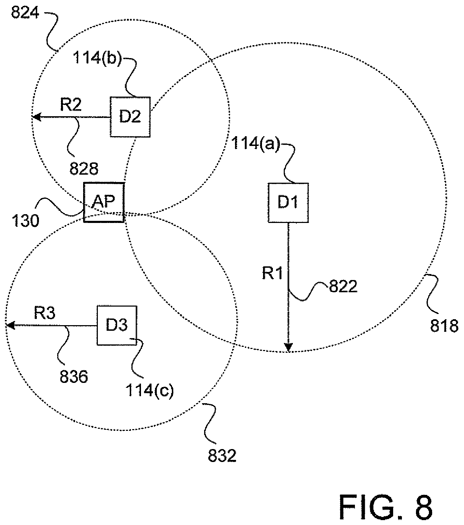

In the FIG. 6 embodiment, location server 126 uses AP location calculator 626 to analyze appropriate information from WiFi scan data 440 to determine specific locations for one or more access points 130 (FIG. 1) in any effective manner. For example, AP location calculator 626 may utilize WiFi scan data 440 to calculate location coordinates for a given access point 130 by performing basic triangulation calculations, as discussed below in conjunction with FIG. 8. In other embodiments, more complex calculation techniques may be utilized to build statistical models that represent the location of one or more access points 130 by utilizing a greater number of AP measurements from mobile devices 114.

In the FIG. 6 embodiment, AP location calculator 626 may populate and update AP database 432 with newly calculated locations of one or more access points 130. One embodiment for AP database 432 is further discussed below in conjunction with FIG. 7. Location server 126 may utilize communication module 638 to conduct bi-directional communications with any external entity, including but not limited to, mobile devices 114. Miscellaneous information 654 may include any other information or data for use by location server 126. The utilization of location server 126 is further discussed below in conjunction with FIGS. 7-9B.

Referring now to FIG. 7, a block diagram for one embodiment of the AP database 432 of FIGS. 4 and 6 is shown, in accordance with the present invention. The FIG. 7 embodiment is presented for purposes of illustration, and in alternate embodiments, AP database 432 may include components and functionalities in addition to, or instead of, certain of those components and functionalities discussed in conjunction with the FIG. 7 embodiment.

In the FIG. 7 embodiment, AP database 432 includes, but is not limited to, a series of entries 740 that each corresponds to a different access point 130 in the WiFi network. In the FIG. 7 embodiment, each entry 740 includes, but is not limited to, an AP identifier that specifically identifies a corresponding one of the access points 130. Each AP identifier is associated with corresponding AP coordinates that indicate a physical location for the particular access point 130. The AP coordinates may include any desired location information, including but not limited to, a device latitude, a device longitude, and a device altitude. The population of AP database 432 is further discussed below in conjunction with FIGS. 8-9B.

Referring now to FIG. 8, a diagram illustrating an access point location procedure is shown, in accordance with one embodiment of the present invention. The FIG. 8 embodiment is presented for purposes of illustration, and in alternate embodiments, locating access points 130 may include techniques and functionalities in addition to, or instead of, certain of those techniques and functionalities discussed in conjunction with the FIG. 8 embodiment.

In the FIG. 8 example, the location of access point (AP) 130 is unknown. Three mobile devices 114 (D1 114(a), D2 114(b), and D3 114(c)), whose locations are known by utilizing any effective means, are located in relative proximity to access point 130. In an alternate embodiment, a single mobile device 114 may be utilized by simply moving the single device 114 to three (or more) different locations. In alternate embodiment, a greater number of mobile devices 114 may also be utilized.

In accordance with the present invention, device 114(a) scans for, and detects, a WiFi signal from access point 130. In the FIG. 8 embodiment, device 114(a) then records an AP identifier and a signal strength for the scanned access point 130 as WiFi scan data 440. Device 114(a) wirelessly transmits the WiFi scan data 440 to a location server 126 (see FIG. 1) or other appropriate entity. The location server 126 evaluates the signal strength from the received WiFi scan data 440 to create a location circle 818 with a radius R1 822 that represents the distance from device 114(a) to the scanned access point 130. In other words, the target access point 130 lies somewhere on location circle 818.

In the FIG. 8 example, device 114(b) similarly scans for, and detects, a WiFi signal from access point 130. In the FIG. 8 embodiment, device 114(b) then records an AP identifier and a signal strength for the scanned access point 130 as WiFi scan data 440. Device 114(b) wirelessly transmits the WiFi scan data 440 to location server 126 or other appropriate entity. The location server 126 evaluates the signal strength from the received WiFi scan data 440 to create a location circle 824 with a radius R2 828 that represents the distance from device 114(b) to the scanned access point 130. In other words, the target access point 130 lies somewhere on location circle 824.

In the FIG. 8 example, device 114(c) also scans for, and detects, a WiFi signal from access point 130. In the FIG. 8 embodiment, device 114(c) then records an AP identifier and a signal strength for the scanned access point 130 as WiFi scan data 440. Device 114(c) wirelessly transmits the WiFi scan data 440 to location server 126 or other appropriate entity. The location server 126 evaluates the signal strength from the received WiFi scan data 440 to create a location circle 832 with a radius R3 836 that represents the distance from device 114(c) to the scanned access point 130. In other words, the target access point 130 lies somewhere on location circle 832.

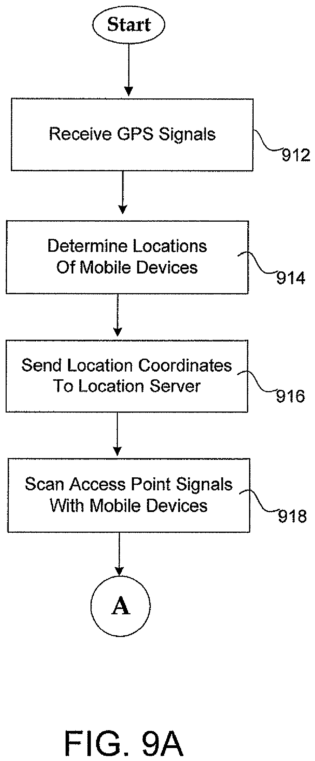

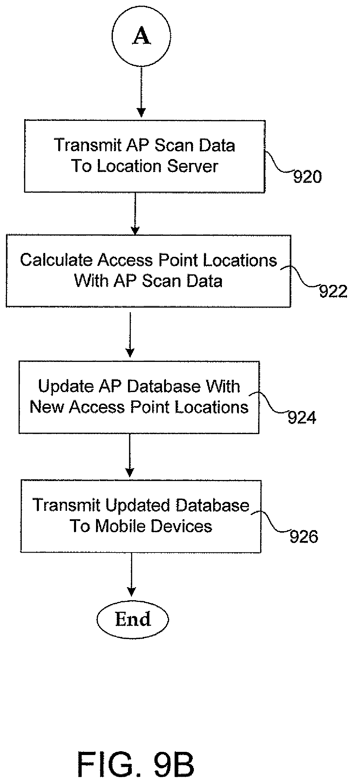

In accordance with the FIG. 8 embodiment, an AP location calculator 626 may then evaluate all the received WiFi scan data 440 from the three mobile devices 114 to determine a specific location for access point 130 by utilizing any effective calculation techniques. For example, in the FIG. 8 example, the location of access point 130 may be defined as the point at which all three location circles 818, 824, and 832 intersect, or as the only point that may be triangulated by utilizing the three radius vectors 822, 824, and 836. Once specific coordinates of access point 130 are know, location server 126 may utilize that location information to update the AP database 432, as discussed above. Additional techniques for updating AP database 432 are discussed below in conjunction with FIG. 9.

Referring now to FIGS. 9A-9B, a flowchart of method steps for efficiently populating an access point database is shown, in accordance with one embodiment of the present invention. The example of FIGS. 9A-9B is presented for purposes of illustration, and in alternate embodiments, the present invention may utilize steps and sequences other than those step and sequences discussed in conjunction with the embodiment of FIGS. 9A-9B.

In the FIG. 9A embodiment, in step 912, mobile devices 114 in an electronic network initially determine their physical location by utilizing any appropriate techniques. For example, in step 912, the mobile devices 114 may receive transmitted signals from a global positioning system (GPS), and in step 914, the mobiles devices 114 may utilize the corresponding GPS signals to determine their respective physical locations. In step 916, the mobile devices 114 each transmit their particular location coordinates to a location server 126 in the electronic network.

In step 918, the mobile devices 114 automatically perform a wireless scanning procedure to detect and store any appropriate AP scan data 440 from access point signals transmitted from one or more access points 130 that are distributed throughout the electronic network. The captured AP scan data 440 may include, but is not limited to, access point identifiers and access point signal strengths corresponding to respective access points 130. The FIG. 9A process then advances to step 920 of FIG. 9B through connecting letter "A."

In step 920, the mobile devices 114 transmit the captured AP scan data 440 to the location server 126 by utilizing any appropriate techniques. In step 922, an AP location calculator 626 of the location server 126 utilizes the received AP scan data 440 to perform an access point location procedure. In particular, AP location calculator 626 utilizes the received AP scan data 440 to calculate specific access point locations for one or more access points 130 in the electronic network by utilizing any appropriate and effective location calculation techniques.

In step 924, the location server 126 updates an access point database 432 with any new or different access point locations that are discovered as a result of the foregoing access point location procedure. Finally, in step 926, the location server 126 transmits the updated access point database 432 to the mobile devices 114 for use in calculating physical locations of the respective mobile devices 114 with respect to the access points 130. The present invention thus provides an improved system and method for efficiently populating an access point database.

The invention has been explained above with reference to certain embodiments. Other embodiments will be apparent to those skilled in the art in light of this disclosure. For example, the present invention may readily be implemented using configurations and techniques other than those described in the embodiments above. Additionally, the present invention may effectively be used in conjunction with systems other than those described above. Therefore, these and other variations upon the discussed embodiments are intended to be covered by the present invention, which is limited only by the appended claims.

## Claims

1. A system (110) for populating an access point database, comprising:
access points (130a,b,c) that are configured to transmit access point signals by utilizing a wireless broadcasting procedure;
at least three mobile devices (114) adapted to wirelessly receive and analyze said access point signals to automatically and transparently scan on an ongoing basis to detect access point scan data from said access points to produce access point scan data corresponding to said access points wherein the access point scan data includes signal strength information indicating the strength of the signal received at each of the mobile devices; and
a location server (126) adapted to receive said access point scan data, said location server being further adapted to analyze said access point scan data to determine access point locations of said access points, said location sever being further adapted to utilize said access point locations to populate said access point database wherein said location server (126) is adapted to determine said access point locations by performing triangulation procedures that are based upon said signal strength information in the access point scan data and the location of each of the mobile devices.

2. The system of claim 1 wherein said mobile devices are adapted to utilize said access point database to perform device location procedures with reference to said access point locations in said access point database.

3. The system of claim 1 wherein said access points are implemented as WiFi hotspots in a wireless electronic network.

4. The system of claim 1 wherein said access point scan data includes access points identifiers and access point signal strengths for said access points.

5. The system of claim 1 wherein said mobile devices are adapted to automatically produce said access point scan data without assistance from device users.

6. The system of claim 1 wherein physical locations of said mobile devices are determined by utilizing wireless transmission techniques from a global positioning system, said mobile devices are adapted to transmit said physical locations to said location server, said mobile devices are adapted to automatically and continuously scan said access point signals to produce and store said access point scan data, said location server is adapted to gradually build a statistical model of said access point locations from said access point scan data, said location server being further adapted to utilize said access point locations from said statistical model to populate and update said access point database.

7. A method for populating an access point database, comprising:
transmitting access point signals from access points (130a,b,c) by utilizing a wireless broadcasting procedure;
utilizing at least three mobile devices (114) to wirelessly receive and analyze said access point signals to automatically and transparently scan on an ongoing basis to produce access point scan data corresponding to said access points wherein the access point scan data includes signal strength information indicating the strength of the signal received at each of the mobile devices; and
receiving said access point scan data with a location server (126) that analyzes said access point scan data to determine access point locations of said access points, said location server utilizing said access point locations to populate said access point database wherein the location server determines said access point locations by performing triangulation procedures that are based upon said signal strength information in the access point scan data and the location of each of the mobile devices.

## Patentansprüche

1. System (110) zum Besiedeln einer Zugangspunkt-Datenbank, umfassend:
Zugangspunkte (130a, b, c), die konfiguriert sind, Zugangspunktsignale durch Nutzen einer drahtlosen Rundsendeprozedur zu übertragen;
mindestens drei Mobilvorrichtungen (114), angepasst zum drahtlosen Empfangen und Analysieren der Zugangspunktsignale, um automatisch und transparent auf einer laufenden Basis abzutasten, um Zugangspunkt-Abtastdaten von den Zugangspunkten zu detektieren, um Zugangspunkt-Abtastdaten zu produzieren, die mit den Zugangspunkten korrespondieren, wobei die Zugangspunkt-Abtastdaten Signalstärkeinformationen enthalten, die die Stärke des an jeder der Mobilvorrichtungen empfangenen Signals angeben; und
einen Standortserver (126), angepasst zum Empfangen der Zugangspunkt-Abtastdaten, wobei der Standortserver ferner angepasst ist, die Zugangspunkt-Abtastdaten zu analysieren, um Zugangspunkt-Standorte der Zugangspunkte zu bestimmen, wobei der Standortserver ferner angepasst ist, die Zugangspunkt-Standorte zu nutzen, um die Zugangspunkt-Datenbank zu besiedeln, wobei der Standortserver (126) angepasst ist, die Zugangspunkt-Standorte durch Durchführen von Triangulationsprozeduren, die auf den Signalstärkeinformationen in den Zugangspunkt-Abtastdaten und dem Standort jeder der Mobilvorrichtungen basieren, zu bestimmen.

2. System nach Anspruch 1, wobei die Mobilvorrichtungen angepasst sind, die Zugangspunkt-Datenbank zu nutzen, um Vorrichtungslokalisierungsprozeduren unter Bezugnahme auf die Zugangspunkt-Standorte in der Zugangspunkt-Datenbank durchzuführen.

3. System nach Anspruch 1, wobei die Zugangspunkte als WLAN-Hotspots in einem drahtlosen elektronischen Netzwerk implementiert sind.

4. System nach Anspruch 1, wobei die Zugangspunkt-Abtastdaten Zugangspunktkennungen und Zugangspunkt-Signalstärken für die Zugangspunkte enthalten.

5. System nach Anspruch 1, wobei die Mobilvorrichtungen angepasst sind, die Zugangspunkt-Abtastdaten ohne Unterstützung von Vorrichtungsbenutzern automatisch zu produzieren.

6. System nach Anspruch 1, wobei physikalische Standorte der Mobilvorrichtungen durch Nutzen drahtloser Übertragungstechniken von einem globalen Positionierungssystem bestimmt werden, wobei die Mobilvorrichtungen angepasst sind, die physikalischen Standorte an den Standortserver zu übertragen, wobei die Mobilvorrichtungen angepasst sind, die Zugangspunktsignale automatisch und kontinuierlich abzutasten, um Zugangspunkt-Abtastdaten zu produzieren und zu speichern, wobei der Standortserver angepasst ist, ein statistisches Modell der Zugangspunkt-Standorte aus den Zugangspunkt-Abtastdaten langsam zu errichten, wobei der Standortserver ferner angepasst ist, die Zugangspunkt-Standorte aus dem statistischen Modell zu nutzen, die Zugangspunkt-Datenbank zu besiedeln und zu aktualisieren.

7. Verfahren zum Besiedeln einer Zugangspunkt-Datenbank, umfassend:
Übertragen von Zugangspunktsignalen von Zugangspunkten (130a, b, c) durch Nutzen einer drahtlosen Rundsendeprozedur;
Nutzen von mindestens drei Mobilvorrichtungen (114) zum drahtlosen Empfangen und Analysieren der Zugangspunktsignale, um automatisch und transparent auf einer laufenden Basis abzutasten, um Zugangspunkt-Abtastdaten korrespondierend mit den Zugangspunkten zu detektieren, wobei die Zugangspunkt-Abtastdaten Signalstärkeinformationen enthalten, die die Stärke des an jeder der Mobilvorrichtungen empfangenen Signals angeben; und
Empfangen der Zugangspunkt-Abtastdaten mit einem Standortserver (126), der die Zugangspunkt-Abtastdaten analysiert, um Zugangspunkt-Standorte der Zugangspunkte zu bestimmen, wobei der Standortserver die Zugangspunkt-Standorte nutzt, um die Zugangspunkt-Datenbank zu besiedeln, wobei der Standortserver die Zugangspunkt-Standorte durch Durchführen von Triangulationsprozeduren, die auf den Signalstärkeinformationen in den Zugangspunkt-Abtastdaten und dem Standort jeder der Mobilvorrichtungen basieren, bestimmt.

## Revendications

1. Système (110) de peuplement d'une base de données de points d'accès comprenant :
des points d'accès (130a, b, c) qui sont configurés pour transmettre des signaux de points d'accès en utilisant une procédure de diffusion sans fil ;
au moins trois dispositifs mobiles (114) adaptés pour recevoir sans fil et analyser lesdits signaux de points d'accès pour effectuer un balayage de manière automatique et transparente pour détecter des données de balayage de points d'accès à partir desdits points d'accès pour produire des données de balayage de points d'accès correspondant auxdits points d'accès, où les données de balayage de points d'accès comprennent des informations d'intensité de signal indiquant l'intensité du signal reçu au niveau de chacun des dispositifs mobiles ; et
un serveur d'emplacements (126) adapté pour recevoir lesdites données de balayage de points d'accès, ledit serveur d'emplacements étant en outre adapté pour analyser lesdites données de balayage de points d'accès pour déterminer les emplacements de points d'accès desdits points d'accès, ledit serveur d'emplacements étant en outre adapté pour utiliser lesdits emplacements de points d'accès pour peupler ladite base de données de points d'accès, où ledit serveur d'emplacements (126) est adapté pour déterminer lesdits emplacements de points d'accès en effectuant des procédures de triangulation qui sont basées sur lesdites informations d'intensité de signal dans les données de balayage de points d'accès et l'emplacement de chacun des dispositifs mobiles.

2. Système selon la revendication 1, dans lequel lesdits dispositifs mobiles sont adaptés pour utiliser ladite base de données de points d'accès pour effectuer des procédures de localisation de dispositifs en référence auxdits emplacements de points d'accès dans ladite base de données de points d'accès.

3. Système selon la revendication 1, dans lequel lesdits points d'accès sont mis en oeuvre en tant que points d'accès Wifi dans un réseau électronique sans fil.

4. Système selon la revendication 1, dans lequel lesdites données de balayage de points d'accès comprennent des identifiants de points d'accès et des intensités de signaux de points d'accès pour lesdits points d'accès.

5. Système selon la revendication 1, dans lequel lesdits dispositifs mobiles sont adaptés pour produire automatiquement lesdites données de balayage de points d'accès sans l'aide des utilisateurs des dispositifs.

6. Système selon la revendication 1, dans lequel les emplacements physiques desdits dispositifs mobiles sont déterminés en utilisant des techniques de transmission sans fil à partir d'un système de localisation GPS, où lesdits dispositifs mobiles sont adaptés pour transmettre lesdits emplacements physiques audit serveur d'emplacements, lesdits dispositifs mobiles sont adaptés pour balayer automatiquement et de manière continue lesdits signaux de points d'accès pour produire et stocker lesdites données de balayage de points d'accès, ledit serveur d'emplacements est adapté pour construire progressivement un modèle statistique desdits emplacements de points d'accès à partir desdites données de balayage de points d'accès, ledit serveur d'emplacements étant en outre adapté pour utiliser lesdits emplacements de points d'accès à partir dudit modèle statistique pour peupler et mettre à jour ladite base de données de points d'accès.

7. Procédé pour peupler une base de données de points d'accès, comprenant les étapes suivantes :
transmettre des signaux de points d'accès à partir de points d'accès (130a, b, c) en utilisant une procédure de diffusion sans fil ;
utiliser au moins trois dispositifs mobiles (114) pour recevoir sans fil et analyser lesdits signaux de points d'accès pour effectuer un balayage de manière automatique et transparente, en continu, pour produire des données de balayage de points d'accès correspondant auxdits points d'accès, où les données de balayage de points d'accès comprennent des informations d'intensité de signal indiquant l'intensité du signal reçu au niveau de chacun des dispositifs mobiles ; et
recevoir lesdites données de balayage de points d'accès, ledit serveur d'emplacements étant en outre adapté pour analyser lesdites données de balayage de points d'accès pour déterminer les emplacements de points d'accès desdits points d'accès, ledit serveur d'emplacements étant en outre adapté pour utiliser lesdits emplacements de points d'accès pour peupler ladite base de données de points d'accès, où ledit serveur d'emplacements (126) est adapté pour déterminer lesdits emplacements de points d'accès en effectuant des procédures de triangulation qui sont basées sur lesdites informations d'intensité de signal dans les données de balayage de points d'accès et l'emplacement de chacun des dispositifs mobiles.
